# EUROPÄISCHE PATENTSCHRIFT

(11) **EP 1 611 422 B1**
(45) Veröffentlichungstag und Bekanntmachung des Hinweises auf die Patenterteilung: **08.07.2015**
(21) Anmeldenummer: 04725940.3
(22) Anmeldetag: 06.04.2004
(51) Int. Cl.: G01L 19/00, G01L 19/04, G01L 19/06

(54) **RELATIVDRUCKMESSUMFORMER**
RELATIVE PRESSURE TRANSDUCER
CONVERTISSEUR DE MESURE DE PRESSION RELATIVE

(30) Priorität: 07.04.2003 DE 10316033
(43) Veröffentlichungstag der Anmeldung: 04.01.2006
(73) Patentinhaber: ENDRESS + HAUSER GMBH + CO., D-79689 Maulburg (DE)
(72) Erfinder: TANNER, Jürgen, 79400 Kandern (DE); BECHER, Raimund, 79238 Ehrenkirchen (DE)
(74) Vertreter: Andres, Angelika Maria
(86) Internationale Anmeldenummer: PCT/EP2004/003680
(87) Internationale Veröffentlichungsnummer: WO 2004/090494

(56) Entgegenhaltungen:
- US-A1- 2001 029 786
- US-B1- 6 279 401

## Beschreibung

Die Erfindung betrifft einen Relativdruckmeßumformer mit einem Gehäuse, einem Relativdrucksensor, und einer an den Relativdrucksensor angeschlossenen Referenzdruckzuleitung,
über die der Relativdrucksensor durch eine das Gehäuse durchdringende Bohrung mit einer Umgebung des Relativdruckmeßumformers in Verbindung ste ht.

In der Druckmeßtechnik wird zwischen Differenz-, Absolut- und Relativdruckmeßumformern unterschieden. Differenzdruckmeßumformer dienen der Messung der Differenz zwischen zwei verschiedenen Drücken. Bei Absolutdruckmeßumformern wird ein zu messender Druck absolut, d.h. als Druckunterschied gegenüber einem Vakuum erfaßt. Mit einem Relativdruckmeßumformer wird ein zu messender Druck in Form eines Druckunterschiedes gegenüber einem Referenzdruck aufgenommen. Der Referenzdruck ist in der Regel ein Umgebungsdruck der dort herrscht, wo sich der Relativdruckmeßumformer befindet. Bei den meisten Anwendungen ist dies der Atmosphärendruck am Einsatzort. Wird der Sensor jedoch z.B. in einem unter Über- oder Unterdruck stehenden Raum eingesetzt, so ist der Referenzdruck der Rauminnendruck.

US Patent 6 297 401 *offenbart beispielsweise einen Differenzdrucksensor, bei denen in den hydraulischen Zuleitungen für die zwei verschiedenen Drücke mittels stiftförmigen Einsätzen Flammendurchschlagsperren realisiert sind, die zugleich als Drosseln gegen hochfrequente Druckschwankungen dienen.*

US Patentanmeldung 2001 029786 A1 *offenbar einen Relativdrucksensor mit einem Feuchtefilter im Referenzluftpfad.*

Bei einigen herkömmlichen Relativdruckmeßumformern führt die Referenzdruckzufuhr vom Relativdrucksensor in einen Innenraum des Gehäuses und endet dort. Das Gehäuse weist eine nach außen führende durchgehende Bohrung auf, über die die Referenzdruckzufuhr an die Umgebung des Relativdruckmeßumformers angeschlossen ist.

Die Bohrung ist zum Schutz vor eindringender Feuchtigkeit regelmäßig mit einem Filter verschlossen, der ein Eindringen von Feuchtigkeit vermeiden soll.

In Abhängigkeit von einer Temperatur der Umgebung ist jedoch immer eine gewisser Anteil Feuchtigkeit in dem Medium, das den
Relativdruckmeßumformer umgibt, sei es Luft oder ein Gas, enthalten. Handelsübliche Filter sind nicht in der Lage diese Feuchtigkeit vollständig herauszufiltern. Durch einen Austausch des Mediums, das den Relativdruckmeßumformer umgibt durch den Filter hindurch kann daher Feuchtigkeit in den Innenraum gelangen. Je größer der Innenraum des Gehäuses ist, umso größer ist dabei die ausgetauschte Mediumsmenge, und damit die eindringende Feuchtigkeit.

Ist die Temperatur in der Umgebung höher als die Temperatur im Inneren des Gehäuses, so kann im Inneren des Gehäuses der Taupunkt unterschritten werden und es bildet sich Kondensat, das sich im Inneren des Gehäuses niederschlägt. Das Kondensat sammelt sich im Gehäuse.

Weiterhin offebart DE 42 44 460 C1 einen Relativdruckmessumformer, bei dem die elektronische Schaltungsanordnung vor mechanischen Beschädigungen geschützt ist.

In dem Gehäuse eventuell vorhandene elektronische Schaltungen und der Relativdrucksensor sind in der Regel sehr empfindlich gegenüber Feuchtigkeit.

Es ist eine Aufgabe der Erfindung, einen Relativdruckmessumformer anzugeben, der gegenüber einem Eindringen von Feuchtigkeit geschützt ist.

Die Aufgabe wird erfindungsgemäß gelöst durch den Relativdruckmessumformer gemäß Anspruch 1.

Die Erfindung offenbart einen Relativdruckmeßumformer mit
einem Sensorblock;
einem in den Sensorblock eingefaßten Relativdrucksensor;
einem Gehäuse, welches den Sensorblock teilweise umschließt;
einem in dem Gehäuse angeordneten Einsatz, wobei der Einsatz einen Boden aufweist, wobei in dem Boden eine erste Öffnung vorgesehen ist;
einem zwischen dem Gehäuse und dem Einsatz bestehenden ringförmig umlaufenden Spalt, wobei der Spalt durch zwei zwischen dem Gehäuse und dem Einsatz eingespannte Dichtungen begrenzt ist; und
einer Referenzdruckzuleitung, die in den Einsatz hinein führt, die über die erste Öffnung in dem Boden an den Relativdrucksensor angeschlossen ist, die an einer zweiten Öffnung in einer Außenwand des Einsatzes mündet, und die über die zweite Öffnung mit dem Spalt verbunden ist, bei dem das Gehäuse eine durchgehende Bohrung aufweist, über die der Spalt mit einer Umgebung des Relativdruckmeßumformers in Verbindung steht,
wobei der Einsatz aus einem feuchte-beständigen Material, insb. aus einem Kunststoff besteht,
wobei im Inneren des Einsatzes eine elektronische Schaltung angeordnet ist,
wobei zum Schutz der elektronischen Schaltung im Inneren des Einsatzes eine elektrisch leitfähige Schicht vorgesehen ist, die einen Innenraum des Einsatzes einschließt.

Gemäß einer Weiterbildung schließt eine direkte Verbindung im Spalt zwischen der Bohrung und der Öffnung ein Kreissegment um eine Längsachse des Einsatzes oder des Gehäuses ein.

Gemäß einer Weiterbildung befindet sich die Bohrung im Gehäuse auf einer der Öffnung gegenüber liegenden Seite des Einsatzes.

Gemäß einer Ausgestaltung weist die Bohrung eine Länge von mindestens sechs Millimetern auf, und es ist ein Stift in die Bohrung eingesetzt.

Gemäß einer Ausgestaltung ist die Öffnung durch einen feuchtigkeitsabweisenden gasdurchlässigen Filter verschlossen.

Ein Vorteil der Erfindung besteht darin, daß die Referenzdruckzufuhr insgesamt ein gegenüber dem Innenraum des Gehäuses sehr geringes Volumen aufweist. Das Volumen wird im wesentlichen aus einem Innenvolumen der Referenzdruckzuleitung und einem Innenvolumen des Spalts gebildet. Ein geringes Volumen bietet den Vorteil, daß geringere Mengen des Mediums zwischen dem Innenvolumen und der Umgebung ausgetauscht werden.

Ein weiterer Vorteil besteht darin, daß die Referenzdruckzufuhr eine große Länge aufweist. Sie führt von der Bohrung durch den Spalt und die gesamte Länge der Referenzdruckzuleitung zum Referenzdrucksensor. Zwischen dem Medium, das sich in der Nähe des Relativdrucksensors befindet und dem Medium in der Umgebung des Relativdruckmeßumformers findet aufgrund der großen hierfür zurückzulegenden Wegstrecke und dem entlang der Wegstrecke geringen hierfür zur Verfügung stehenden Volumen pro Weglänge praktisch kein Austausch statt. Demgegenüber erfolgt die Druckübertragung des Referenzdrucks im wesentlichen ungehindert.

Trotzdem eindringende Feuchtigkeit wird sich im Bereich nahe der Bohrung, insb. im Spalt ansammeln und gegebenfalls dort kondensieren. Da der Einsatz aus einem feuchtigkeitsbeständigen Material besteht, bleibt dies ohne nachteilige Folgen. Ein weiterer Vorteil besteht darin, daß der Spalt durch zwei Dichtungen abgedichtet ist. Eventuell in den Spalt eindringende Feuchtigkeit kann dadurch weder in das Innere des Einsatzes noch in Innenräume des Gehäuses außerhalb des Spalts gelangen. Sowohl der Relativdrucksensor als auch eine gegebenenfalls im Inneren des Einsatzes befindliche elektronische Schaltung sind damit vor Feuchtigkeit geschützt.

Zusätzlich bieten die Dichtungen den Vorteil, daß der Spalt auf sehr einfache Weise herstellbar ist und der Einsatz durch die Dichtungen im Gehäuse fixiert ist.

Die Erfindung und weitere Vorteile werden nun anhand der Figuren der Zeichnung, in der ein Ausführungsbeispiel dargestellt ist, näher erläutert; gleiche Elemente sind in den Figuren mit gleichen Bezugszeichen versehen.
Fig. 1 zeigt einen Schnitt durch einen Relativdruckmeßumformer;
Fig. 2 zeigt einen Schnitt durch dessen Gehäuse; und
Fig. 3 zeigt einen Schnitt durch dessen Einsatz.

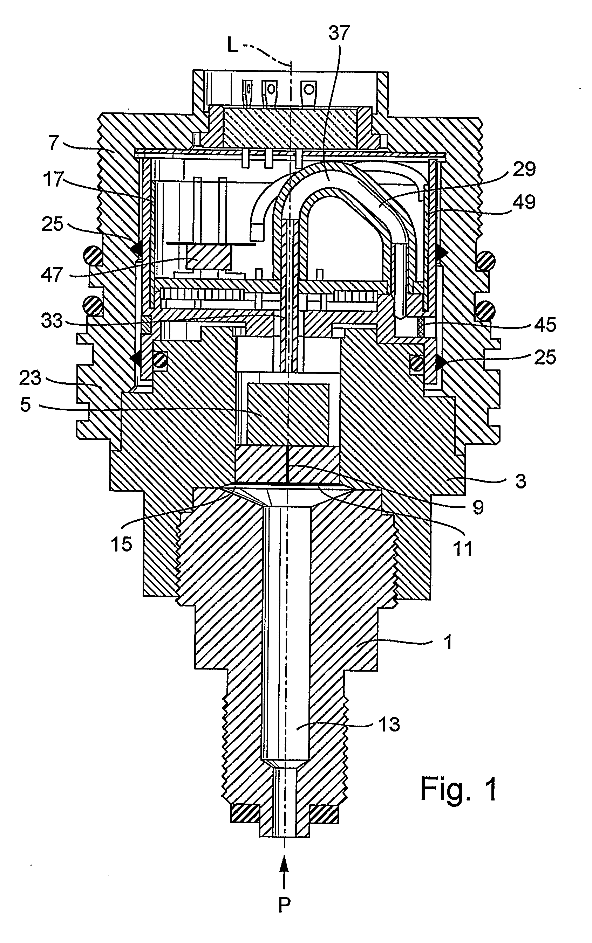

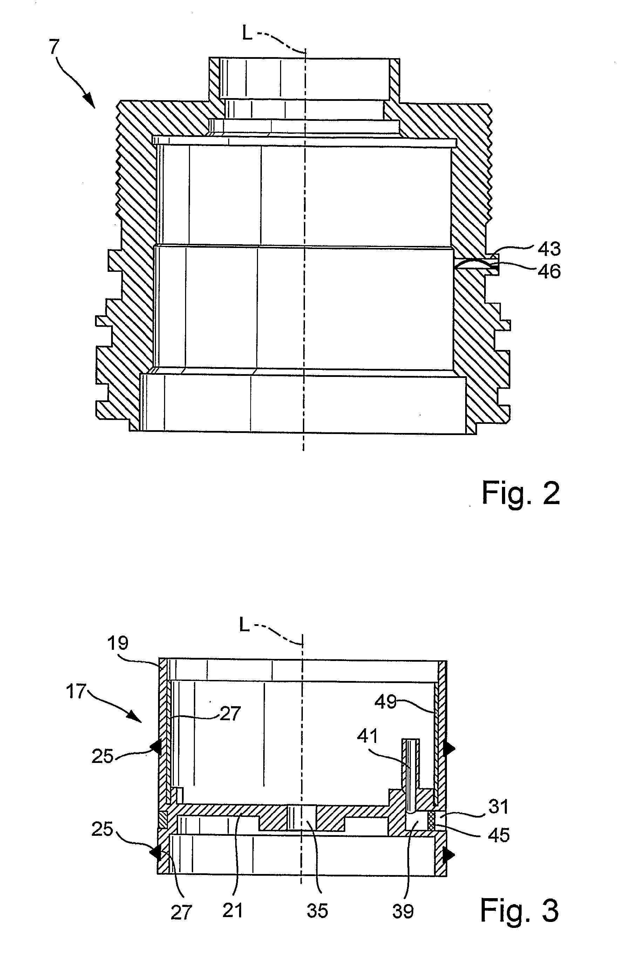

In Fig. 1 ist ein Schnitt durch einen erfindungsgemäßen Relativdruckmeßumformer dargestellt. Der Relativdruckmeßumformer weist einen Prozeßanschluß 1, einen in einem Sensorblock 3 eingefaßten Relativdrucksensor 5 und ein den Sensorblock 3 teilweise umschließendes Gehäuse 7 auf. Fig. 2 zeigt einen Schnitt durch das Gehäuse 7.

Als Relativdrucksensoren sind beispielsweise kapazitive keramische Sensoren oder Halbleitersensoren, z.B. Polysiliziumsensoren einsetzbar. In dem dargestellten Ausführungsbeispiel ist schematisch ein Halbleitersensor dargestellt, dem ein Druckmittler 9 vorgeschaltet ist. Der Druckmittler 9 schließt den Sensorblock 3 frontbündig mit einer Trennmembran 11 ab, auf die im Betrieb der zu messende Druck p einwirkt. Der zu messende Druck p wird durch den Druckmittler 9 auf den Relativdrucksensor 5 übertragen.

Der Prozeßanschluß 1 ist fest mit dem Sensorblock 3 verbunden, z.B. verschraubt. Er dient der Befestigung des Relativdruckmeßumformers an einem Meßort und weist eine zentrale axiale durchgehende Bohrung 13 auf, die in einer Kammer 15 mündet. Auf einer der Bohrung 13 gegenüberliegenden Seite der Kammer 15 befindet sich die Trennmembran 11. Der zu messende Druck p wird dem Relativdrucksensor 1 im Betrieb durch die Bohrung 13 hindurch zugeführt.

In dem Gehäuse 7 ist ein Einsatz 17 angeordnet. Fig. 3 zeigt einen Schnitt durch den Einsatz 17. Der Einsatz 17 besteht vorzugsweise aus einem feuchte-beständigen Material, insb. aus einem Kunststoff. Er ist in dem dargestellten Ausführungsbeispiel im wesentlichen topfförmig, d.h. er weist einen zylindrischen Abschnitt 19 auf, der von einem Boden 21 abgeschlossen ist.

Zwischen dem Gehäuse 7 und dem Einsatz 17 besteht ein ringförmig umlaufender Spalt 23. In dem dargestellten Ausführungsbeispiel sind sowohl das Gehäuse 7 als auch der Einsatz 17 im wesentlichen zylindrisch, so daß auch der Spalt 23 im wesentlichen zylindrische Form hat.

Der Spalt 23 ist durch zwei zwischen dem Gehäuse 7 und dem Einsatz 17 eingespannte Dichtungen 25 begrenzt. Die Dichtungen 25 sind ringförmig. Zur Aufnahme der Dichtungen 25 weist der Einsatz 17 auf dessen Außenseite zwei ringförmig umlaufende Nuten 27 auf.

An den Relativdrucksensor 5 ist eine Referenzdruckzuleitung 29 angeschlossen, die in den Einsatz 17 hinein führt und an einer Außenwand 31 des Einsatzes 17 mündet.

In dem dargestellten Ausführungsbeispiel umfaßt die Referenzdruckzuleitung 29 ein mit dem Relativdrucksensor 5 fest verbundenes Röhrchen 33, das von einer Referenzdruckseite des Relativdrucksensors 5 aus dem Sensormodul 3 heraus und durch den Boden 21 des Einsatzes 17 hindurch in den Einsatz 17 hinein führt. Hierfür ist im Boden 21 eine Öffnung 35 vorgesehen.

Im Einsatz 17 ist an das Röhrchen 33 ein erstes Ende eines Schlauchs 37 druckfest angeschlossen. Der Schlauch 37 besteht z.B. aus Silikon und ist auf das Röhrchen 33 aufgesteckt.

Der Einsatz 17 weist im Bereich der Mündung der Referenzdruckzufuhr 27 eine radial von außen in den Boden 21 des Einsatzes 17 hineinführende Sacklochbohrung 39 auf. Im Inneren des Einsatzes 17 ist an den Boden 21 des Einsatzes 17 ein Röhrchen 41 angeformt, das in der Sacklochbohrung 39 mündet. An der Mündung weist der Boden 21 eine Öffnung auf, durch die ein Innenraum des Röhrchens 41 mit einem Innenraum der Sacklochbohrung 39 in Verbindung steht. Ein zweites Ende des Schlauchs 37 ist druckfest an das Röhrchen 41 angeschlossen. Der Schlauch 37 ist z.B. auf das Röhrchen 41 aufgesteckt.

Die Sacklochbohrung 39 bildet eine Öffnung in der Außenwand 31 des Einsatzes 17 über die ein Innenraum der Referenzdruckzufuhr 27 mit dem Spalt 23 verbunden ist.

Das Gehäuse 7 weist eine durchgehende Bohrung 43 auf, über die der Spalt 23 und damit auch die Referenzdruckzufuhr 29 mit einer Umgebung des Relativdruckmeßumformers in Verbindung steht.

Es ist möglich, die Bohrung 43 unmittelbar gegenüber der Öffnung der Sacklochbohrung 39 anzuordnen. Vorteilhafter ist es jedoch, wenn die Bohrung 43 gegenüber der Öffnung der Sacklochbohrung 39 versetzt angeordnet ist. Hierdurch wird die effektive Länge der Referenzdruckzufuhr 29 vergößert. Vorzugsweise schließt eine direkte Verbindung im Spalt 23 zwischen der Bohrung 43 und der Öffnung der Sacklochbohrung 39 ein Kreissegment um eine Längsachse L des Einsatzes 17 oder des Gehäuses 7 ein. Im vorliegenden Ausführungsbeispiel sind die beiden Längsachsen L identisch.

Die längste Wegstrecke ist erzielbar, wenn sich die Bohrung 43 im Gehäuse 7 auf einer der Öffnung gegenüber liegenden Seite des Einsatzes 17 befindet.

Vorzugsweise weist die Bohrung 43 eine Länge von mindestens sechs Millimetern auf. Dies ist beispielsweise durch eine entsprechende Wandstärke des Gehäuses 7 im Bereich der Bohrung 43 realisierbar. Wird ein Gehäuse 7 mit geringfügig geringerer Wandstärke eingesetzt, kann diese Länge erreicht werden, indem eine Längsachse der Bohrung 43 gegenüber einer Senkrechten zu einer an dem Gehäuse 7 im Bereich der Bohrung 43 anliegenden Tangente versetzt ausgerichtet ist. In die Bohrung 43 ist ein Stift 46, z.B. aus Metall eingesetzt. Zwischen der Bohrung 43 und dem Stift 46 besteht ein Spalt, über den ein Druckausgleich durch die Bohrung 43 hindurch erfolgt. Der Stift 46 ist in der Bohrung 43 fixiert. Dies erfolgt beispielsweise, indem ein gekrümmter Stift 46 verwendet wird, der in die Bohrung 43 eingeschlagen wird.

Die Bohrung 43 und der Stift 46 bilden eine Flammendurchschlagsperre. Derartige Flammendurchschlagsperren sind insb. bei Anwendungen in explosionsgefährdeten Bereichen erforderlich.

Vorzugsweise ist die Öffnung der Sacklochbohrung 39 durch einen feuchtigkeitsabweisenden gasdurchlässigen Filter 45 verschlossen. Hierzu sind z.B. Filter aus Metall, Polytetrafluorethylen (PTFE) oder Goretex geeignet.

Im Inneren des Einsatzes 17 befindet sich eine elektronische Schaltung 47, z.B. eine Vorortelektronik des Relativdrucksensors 5. Zum Schutz der elektronischen Schaltung 47 vor elektromagnetischen Störungen ist im Inneren des Einsatzes 17 eine elektrisch leitfähige Schicht 49 vorgesehen, die einen Innenraum des Einsatzes 17 einschließt. Die Schicht 49 kann z.B. eine auf einer Innenseite des Einsatzes aufgebrachte metallische Folie, z.B. aus Kupfer, oder ein metallischer Lack sein.

## Patentansprüche

1. Relativdruckmessumformer mit
einem Sensorblock (3);
einem in den Sensorblock (3) eingefaßten Relativdrucksensor (5);
einem Gehäuse (7), welches den Sensorblock (3) teilweise umschließt; einem in dem Gehäuse (7) angeordneten Einsatz (17),wobei der Einsatz (17) einen Boden (21) aufweist, wobei in dem Boden eine erste Öffnung (35) vorgesehen ist;
einem zwischen dem Gehäuse (7) und dem Einsatz (17) bestehenden ringförmig umlaufenden Spalt (23), wobei der Spalt (23) durch zwei zwischen dem Gehäuse (7) und dem Einsatz (17) eingespannte Dichtungen (25) begrenzt ist; und
einer Referenzdruckzuleitung (29), die in den Einsatz (17) hinein führt, die über die erste Öffnung (35) in dem Boden (21) an den Relativdrucksensor (5) angeschlossen ist, die an einer zweiten Öffnung in einer Außenwand (31) des Einsatzes (17) mündet, und die über die zweite Öffnung mit dem Spalt (23) verbunden ist, bei dem das Gehäuse (7) eine durchgehende Bohrung (43) aufweist, über die der Spalt (23) mit einer Umgebung des Relativdruckmeßumformers in Verbindung steht,
wobei der Einsatz (17) aus einem feuchte-beständigen Material, insb. aus einem Kunststoff besteht,
wobei im Inneren des Einsatzes (17) eine elektronische Schaltung (47) angeordnet ist,
wobei zum Schutz der elektronischen Schaltung im Inneren des Einsatzes (17) eine elektrisch leitfähige Schicht (49) vorgesehen ist, die einen Innenraum des Einsatzes (17) einschließt.

2. Relativdruckmeßumformer nach Anspruch 1, bei dem eine direkte Verbindung im Spalt (23) zwischen der Bohrung (43) und der zweiten Öffnung ein Kreissegment um eine Längsachse (L) des Einsatzes (17) oder des Gehäuses (7) einschließt.

3. Relativdruckmeßumformer nach Anspruch 1, bei dem sich die Bohrung (43) im Gehäuse (7) auf einer der Öffnung gegenüber liegenden Seite des Einsatzes (17) befindet.

4. Relativdruckmeßumformer nach Anspruch 1, bei dem die Bohrung (43) eine Länge von mindestens sechs Millimetern aufweist, und ein Stift (46) in die Bohrung (43) eingesetzt ist.

5. Relativdruckmeßumformer nach Anspruch 1, bei dem die zweite Öffnung durch einen feuchtigkeitsabweisenden gasdurchlässigen Filter (45) verschlossen ist.

## Claims

1. Relative pressure transmitter with
a sensor block (3);
a relative pressure sensor (5) incorporated into the sensor block (3);
a housing (7) which partially encloses the sensor block (3);
an insert (17) arranged in the housing (7), wherein said insert (17) has a floor (21), wherein a first opening (35) is provided in the floor;
an annular, circumferential gap (23) between the housing (7) and the insert (17), wherein the gap (23) is limited by two seals (25) clamped between the housing (7) and the insert (17); and
a reference pressure line (29), which runs into the insert (17) and which is connected to the relative pressure sensor (5) via the first opening (35) in the floor (21) and which ends at a second opening in an outer wall (31) of the insert (17) and which is connected via the second opening to the gap (23), wherein the housing (7) has a continuous bore hole (43) by means of which the gap (23) is in connection with an environment of the relative pressure transmitter,
wherein the insert (17) consists of a moisture-resistant material, particularly a plastic,
wherein an electronic circuit (47) is arranged inside the insert (17),
wherein to protect the electronic circuit inside the insert (17) an electrically conductive layer (49) is provided that encompasses an interior space of the insert (17).

2. Relative pressure transmitter as claimed in Claim 1, wherein a direct connection in the gap (23) between the bore hole (43) and the second opening encompasses a circular segment around a longitudinal axis (L) of the insert (17) or of the housing (7).

3. Relative pressure transmitter as claimed in Claim 1, wherein the bore hole (43) in the housing (7) is located on a side of the insert (17) that is opposite the opening.

4. Relative pressure transmitter as claimed in Claim 1, wherein the bore hole (43) has a length of at least six millimeters, and a pin (46) is inserted into the bore hole (43)

5. Relative pressure transmitter as claimed in Claim 1, wherein the second opening is sealed by a moisture-repellent filter (45) which is permeable to gas.

## Revendications

1. Transmetteur de pression relative avec
un bloc capteur (3) ;
un capteur de pression relative (5) intégré dans le bloc capteur (3) ;
un boîtier (7), qui renferme partiellement le bloc capteur (3) ;
un insert (17) disposé dans le boîtier (7), l'insert (17) présentant un fond (21), une première ouverture (35) étant prévue dans le fond ;
une fente (23) périphérique annulaire présente entre le boîtier (7) et l'insert (17), la fente (23) étant limitée par deux joints serrés entre le boîtier (7) et l'insert (17) ; et
une conduite de pression de référence (29), qui mène à l'intérieur de l'insert (17), qui est raccordée au capteur de pression relative (5) à travers la première ouverture (35) dans le fond (21), qui aboutit au niveau d'une deuxième ouverture dans une paroi extérieure (31) de l'insert (17), et qui est reliée à travers la deuxième ouverture avec la fente (23), le boîtier (7) comportant un perçage (43) traversant par l'intermédiaire duquel la fente (23) est en relation avec un environnement du transmetteur de pression relative,
pour lequel l'insert (17) est constitué d'un matériau résistant à l'humidité, notamment une matière plastique,
pour lequel est disposé à l'intérieur de l'insert (17) un circuit électronique (47), pour lequel est prévu à l'intérieur de l'insert (17), pour la protection du circuit électronique, une couche (49) électroconductrice qui renferme un espace intérieur de l'insert (17).

2. Transmetteur de pression relative selon la revendication 1, pour lequel une liaison directe dans la fente (23) renferme, entre le perçage (43) et la deuxième ouverture, un segment de cercle autour d'un axe longitudinal (L) de l'insert (17) ou du boîtier (7).

3. Transmetteur de pression relative selon la revendication 1, pour lequel le perçage (43) se trouve dans le boîtier (7) sur un côté de l'insert (17) opposé à l'ouverture.

4. Transmetteur de pression relative selon la revendication 1, pour lequel le perçage (43) fait une longueur d'au moins six millimètres, et pour lequel une broche (46) est insérée dans le perçage (43)

5. Transmetteur de pression relative selon la revendication 1, pour lequel la deuxième ouverture est fermée par un filtre (45) perméable au gaz, résistant à l'humidité.
